# EUROPÄISCHE PATENTSCHRIFT

(11) **EP 2 893 513 B1**
(45) Veröffentlichungstag und Bekanntmachung des Hinweises auf die Patenterteilung: **11.11.2020**
(21) Anmeldenummer: 13753872.4
(22) Anmeldetag: 02.09.2013
(51) Int. Cl.: G07C 5/08, G01P 1/12, G01P 21/02

(54) **VERFAHREN UND VORRICHTUNG ZUM ERMITTELN EINES WERTS EINER BEWEGUNGSABHÄNGIGEN GRÖSSE**
METHOD AND APPARATUS FOR DETERMINING A VALUE OF A MOVEMENT-DEPENDENT VARIABLE
PROCÉDÉ ET DISPOSITIF DE DÉTERMINATION D'UNE VALEUR D'UNE GRANDEUR DÉPENDANTE D'UN MOUVEMENT

(30) Priorität: 03.09.2012 DE 102012215601
(43) Veröffentlichungstag der Anmeldung: 15.07.2015
(73) Patentinhaber: Continental Automotive GmbH, 30165 Hannover (DE)
(72) Erfinder: BARTHOLOMÄUS, Ulf, 78112 St. Georgen (DE)
(86) Internationale Anmeldenummer: PCT/EP2013/068046
(87) Internationale Veröffentlichungsnummer: WO 2014/033288

(56) Entgegenhaltungen:
- EP-A1- 2 302 398
- WO-A2-2008/025763
- DE-A1-102006 036 066
- LINK T ET AL: "A new self-test and self-calibration concept for micro-machined gyroscopes", TRANSDUCERS '05 : THE 13TH INTERNATIONAL CONFERENCE ON SOLID-STATE SENSORS, ACTUATORS AND MICROSYSTEMS ; SEOUL, KOREA, [JUNE 5 - 9, 2005] ; DIGEST OF TECHNICAL PAPERS, IEEE OPERATIONS CENTER, PISCATAWAY, NJ, vol. 1, 5 June 2005 (2005-06-05), pages 401-404, XP010828044, DOI: 10.1109/SENSOR.2005.1496440 ISBN: 978-0-7803-8994-6
- DENIS GINGRAS ET AL: "Signal processing requirements and uncertainty modeling issues in cooperative vehicular positioning", SYSTEMS, SIGNAL PROCESSING AND THEIR APPLICATIONS (WOSSPA), 2011 7TH INTERNATIONAL WORKSHOP ON, IEEE, 9 May 2011 (2011-05-09), pages 303-306, XP031951159, DOI: 10.1109/WOSSPA.2011.5931496 ISBN: 978-1-4577-0689-9

## Beschreibung

Die Erfindung betrifft ein Verfahren und eine Vorrichtung zum Ermitteln eines Werts einer bewegungsabhängigen Größe.

Vorrichtungen, wie zum Beispiel Mauteinheiten oder Tachographen, benötigen ein Positionssignal oder ein Geschwindigkeitssignal. Dieses Signal wird häufig von mehreren Sensoren bereitgestellt. Die Signale der Sensoren werden miteinander verglichen, um gegebenenfalls einen besseren Positionswert oder Geschwindigkeitswert zu gewährleisten.

Die DE 10 2007 059 785 A1 offenbart eine Vorrichtung zum Überprüfen der Plausibilität eines Werts einer bewegungsabhängigen Größe, die einen Drehwertgeber zur Erfassung des Werts der bewegungsabhängigen Größe und einen Inertialsensor aufweist, wobei das Inertialsensorsignal mit einem digitalen Signal des Drehwertgebers verglichen wird.

Die WO 2009/043794 A1 offenbart einen Tachographen und eine Maut-On-Board-Unit, die beide jeweils eine Datenschnittstelle umfassen. Der Tachograph und die Maut-On-Board-Unit sind jeweils als Sender von Daten ausgebildet zum Ermitteln eines kryptographischen Prüfwerts abhängig von Nutzdaten, die über die Datenschnittstelle an den jeweiligen Kommunikationspartner übertragen werden sollen und zum Senden des kryptographischen Prüfwerts. Sie sind außerdem als Empfänger ausgebildet zum Empfangen von Nutzdaten und des zugehörigen kryptographischen Prüfwerts.

Die Dokumente DE 10 2006 036066 A1, WO 2008/025763 A2 und EP 2 302 398 A1 offenbaren Verfahren, bei denen über eine Plausibilisierung der Messwerte mehrerer Sensoren eine etwaige Manipulation eines Sensors adressiert wird.

Die Aufgabe, die der Erfindung zugrunde liegt, ist es, ein Verfahren beziehungsweise eine korrespondierende Vorrichtung zu schaffen, zum Ermitteln eines Werts einer bewegungsabhängigen Größe.

Die Aufgabe wird gelöst durch die Merkmale der unabhängigen Patentansprüche. Vorteilhafte Ausgestaltungen sind in Unteransprüchen gekennzeichnet.

Die Erfindung zeichnet sich aus durch ein Verfahren beziehungsweise durch eine korrespondierende Vorrichtung zum Ermitteln eines Werts einer bewegungsabhängigen Größe. Es wird ein erster Messwert bereitgestellt, der die bewegungsabhängige Größe repräsentiert. Außerdem wird mindestens ein zweiter unabhängiger Messwert bereitgestellt, der die bewegungsabhängige Größe repräsentiert. Jedem Messwert wird ein Vertrauenswert zugeordnet, der repräsentativ ist für eine Manipulationswahrscheinlichkeit des jeweiligen Messwerts. Abhängig von dem ersten und mindestens dem zweiten Messwert und ihrem jeweiligen Vertrauenswert wird der Wert der bewegungsabhängigen Größe ermittelt.

Durch das Berücksichtigen des jeweiligen Vertrauenswertes beim Ermitteln des Werts der bewegungsabhängigen Größe, kann der Wert der bewegungsabhängigen Größe gegebenenfalls genauer und gegebenenfalls zuverlässiger ermittelt werden. Bei dem Wert der bewegungsabhängigen Größe kann es sich zum Beispiel um einen Positionswert für ein Mautgerät und/oder um einen Geschwindigkeitswert für einen Tachographen handeln.

Gemäß einer vorteilhaften Ausgestaltung wird jedem Messwert jeweils ein Genauigkeitswert zugeordnet, der charakteristisch ist für die Genauigkeit des jeweiligen Messwerts. Abhängig von dem jeweiligen Genauigkeitswert wird der Wert der bewegungsabhängigen Größe ermittelt. Indem zusätzlich noch der Genauigkeitswert des Messwerts bei dem Ermitteln des Werts der bewegungsabhängigen Größe genutzt wird, kann der Wert der bewegungsabhängigen Größe gegebenenfalls noch genauer ermittelt werden.

Gemäß der Erfindung werden die Messwerte mit dem jeweiligen Vertrauenswert und optional mit dem jeweiligen Genauigkeitswert gewichtet. Durch die Gewichtung lässt sich mit wenig Rechenaufwand der Wert der bewegungsabhängigen Größe bestimmen.

Gemäß der Erfindung wird der jeweilige Vertrauenswert abhängig von einer Selbstdiagnose des jeweiligen Sensors, der den zugeordneten Messwert bereitstellt, ermittelt. Indem der jeweilige Sensor eine Selbstdiagnose durchführt, kann der Sensor Störungen detektieren. Hierdurch kann anschließend der Vertrauenswert abhängig von der Selbstdiagnose gegebenenfalls angepasst werden.

Gemäß einer weiteren vorteilhaften Ausgestaltung wird abhängig von einem Vergleich des jeweiligen Genauigkeitswerts mit einem Schwellenwert der jeweilige Messwert für das Ermitteln des Werts der bewegungsabhängigen Größe berücksichtigt oder verworfen. So kann gegebenenfalls eine höhere Genauigkeit beim Ermitteln des Werts der bewegungsabhängigen Größe erreicht werden.

Gemäß einer weiteren vorteilhaften Ausgestaltung wird abhängig von dem Wert der bewegungsabhängigen Größe ein Wert einer zweiten bewegungsabhängigen Größe ermittelt. So lässt sich beispielsweise zusätzlich zu einem Positionswert ein Geschwindigkeitswert ermitteln oder zusätzlich zu einem Geschwindigkeitswert ein Positionswert.

Gemäß einer weiteren vorteilhaften Ausgestaltung wird mindestens einer der Messwerte mittels eines satellitenbasierten Messprinzips ermittelt. Durch Messung mittels satellitenbasierten Messprinzips lässt sich gegebenenfalls die Position schnell und relativ genau bestimmen.

Gemäß einer weiteren vorteilhaften Ausgestaltung wird mindestens einer der Messwerte mittels Dedicated Short Range Communication

(DSRC) ermittelt. Da beispielsweise viele Mautsysteme mittels DSRC realisiert sind, ist es gegebenenfalls leicht realisierbar, mittels DSRC den Messwert zu ermitteln.

Gemäß einer weiteren vorteilhaften Ausgestaltung wird der Wert der bewegungsabhängigen Größe abhängig von Kalman-Filterung ermittelt. Durch die Kalman-Filterung ist beispielsweise eine schnelle Ermittlung des Werts der bewegungsabhängigen Größe möglich.

Gemäß einer weiteren vorteilhaften Ausgestaltung werden die Messwerte und/oder die Vertrauenswerte und/oder die Genauigkeitswerte und/oder der Wert der bewegungsabhängigen Größe und/oder der Wert der zweiten bewegungsabhängigen Größe dauerhaft gespeichert. Durch die dauerhafte Speicherung ist es möglich, dass die Daten später ausgelesen und gegebenenfalls ausgewertet werden können.

Gemäß einer weiteren vorteilhaften Ausgestaltung werden die Messwerte und/oder die Vertrauenswerte und/oder die Genauigkeitswerte und/oder der Wert der bewegungsabhängigen Größe und/oder der Wert der zweiten bewegungsabhängigen Größe an ein Hintergrundsystem übertragen. Durch die Übertragung ist es beispielsweise möglich in dem Hintergrundsystem die Daten auszuwerten und gegebenenfalls Manipulationen zu erkennen.

Ausführungsbeispiele der Erfindung sind im Folgenden anhand der schematischen Zeichnungen näher erläutert. Es zeigen:
- Figur 1: eine Vorrichtung zum Ermitteln eines Werts einer bewegungsabhängigen Größe und
- Figur 2: ein Ablaufdiagramm zum Ermitteln eines Werts einer bewegungsabhängigen Größe.

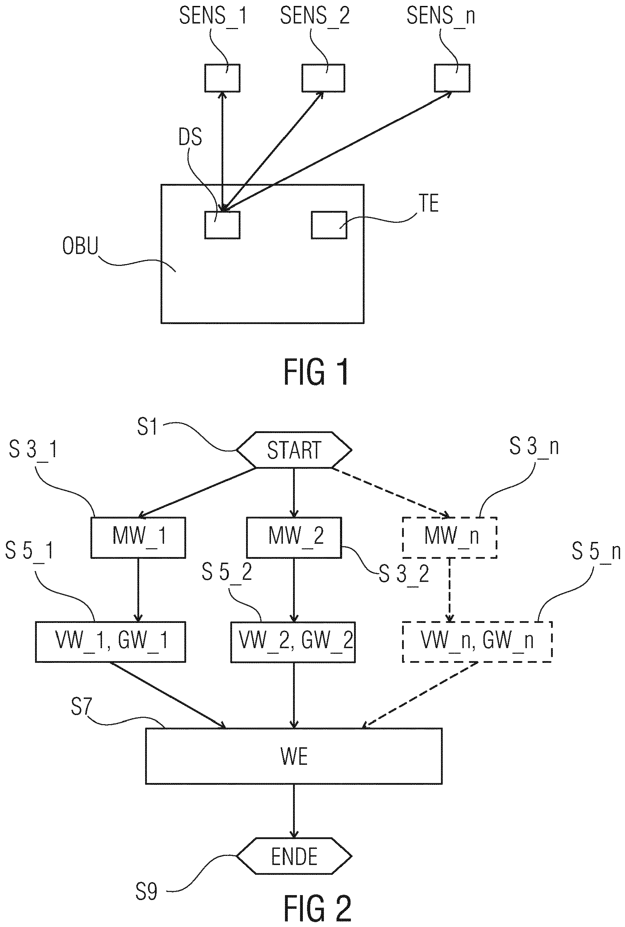

Elemente gleicher Konstruktion oder Funktion sind figurenübergreifend mit den gleichen Bezugszeichen gekennzeichnet. Eine Vorrichtung OBU (Figur 1) zum Ermitteln eines Werts einer bewegungsabhängigen Größe WE ist bevorzugt in einer Mauteinheit oder einem Tachographen eines Kraftfahrzeugs angeordnet.

Die Vorrichtung OBU ist beispielsweise durch Secure Boot und/oder anderen Sicherheitstechniken gesichert. Die Vorrichtung OBU weist mindestens eine Datenschnittstelle DS auf, die beispielsweise über Trusted Elements gesichert ist. Die Datenschnittstelle kann Messwerte MW_1 - MW_n empfangen, die von mehreren Sensoren SENS_1, SENS_2, SENS_n und/oder von anderen Messeinrichtungen bereitgestellt werden. Die Vorrichtung OBU kann die Sensoren SENS_1, SENS_2, SENS_n aufweisen oder eine Teilmenge der Sensoren SENS_1, SENS_2, SENS_n. Die Sensoren SENS_1, SENS_2, SENS_n können auch außerhalb der Vorrichtung OBU angeordnet sein. Sie sind dazu ausgebildet, einen Messwert MW_n bereitzustellen, der die bewegungsabhängige Größe repräsentiert, wie beispielsweise einen Positionswert, oder ein Geschwindigkeitswert.

Der Messwert MW_n kann beispielsweise abhängig von einem satellitenbasiertem Messprinzip ermittelt werden, wie zum Beispiel GPS, Galileo oder GLONASS. Er kann alternativ oder zusätzlich beispielsweise von Zelleninformationen von Mobilfunknetzen wie GSM, UMTS oder LTE ermittelt werden. Alternativ oder zusätzlich kann er abhängig von Dedicated Short Range Communication (DSRC) ermittelt werden. Alternativ oder zusätzlich kann er abhängig von Zelleninformationen von WLAN- oder Bluetooth-Netzen oder anderen Funknetzen ermittelt werden. Alternativ oder zusätzlich kann er abhängig von einer Kombination von vergangenen Werten der bewegungsabhängigen Größe und/oder Fahrzeugsensoren wie beispielsweise Geschwindigkeitssensoren, Beschleunigungssensoren, Gyroskopen, Drehratensensoren, Kompasssensoren und/oder Fahrzeugzustandsinformationen wie beispielsweise ABS- oder ESP-Informationen und/oder anderen Sensoren ermittelt werden, die dem zuständigen Fachmann für einen solchen Zweck bekannt sind.

Die Vorrichtung OBU weist außerdem eine Tachographeneinheit TE auf. Hiermit kann sowohl eine Mauteinheit und eine Tachographeneinheit in einer Vorrichtung realisiert werden.

Ein Programm, das in der Vorrichtung OBU abgearbeitet wird, wird in einem Schritt S1 (Figur 2) gestartet, in dem gegebenenfalls Variablen initialisiert werden können.

In Schritten S3_1 bis S3_n wird jeweils ein Messwert MW_n von den Sensoren SENS_1 bis SENS_n und/oder von anderen Messeinrichtungen bereitgestellt, der die bewegungsabhängige Größe repräsentiert, wie beispielsweise einen Positionswert oder einen Geschwindigkeitswert. Der Messwert MW_n kann beispielsweise zusätzlich einen Zeitstempel aufweisen.

In Schritten S5_1 bis S5_n wird dem jeweiligen Messwert MW_n ein Vertrauenswert VW_n zugeordnet. Der Vertrauenswert VW_n ist repräsentativ für eine Manipulationswahrscheinlichkeit des jeweiligen Messwerts MW_n. Der Vertrauenswert VW_n kann für das jeweilige Messverfahren des Messwerts MW_n vorgegeben sein, er wird erfindungsgemäß jedoch variabel ermittelt. Außerdem wird ein jeweiliger Genauigkeitswert GW_n dem Messwert MW_n zugeordnet, der charakteristisch ist für die Genauigkeit des jeweiligen Messwerts MW_n. Der Genauigkeitswert GW_n kann vorgegeben sein, oder alternativ oder zusätzlich variabel ermittelt werden.

Bei einem satellitenbasierten Messprinzip kann zum Beispiel der Vertrauenswert VW_n ermittelt werden abhängig von einer Anzahl von verwendeten Systemen wie beispielsweise GPS und/oder Galileo und/oder GLONASS, da bei einer Verwendung von mehr als einem System eine Manipulation gegebenenfalls schwieriger durchzuführen ist und deshalb die Manipulationswahrscheinlichkeit sinkt. Der Vertrauenswert VW_n kann alternativ oder zusätzlich ermittelt werden abhängig von einem Verwenden von signierten Diensten, wie zum Beispiel bei Galileo der Kommerzielle Dienst (CS) und/oder der Sichere Dienst (SoL) und/oder der Regulierte Dienst (PRS) . Der Vertrauenswert VW_n wird erfindungsgemäß ermittelt abhängig von einer Selbstdiagnose des jeweiligen Sensors SENS_n beziehungsweise der jeweiligen Messeinrichtung. So kann abhängig von einer Selbstdiagnose beispielsweise eine Signalstörung detektiert werden, wie zum Beispiel durch Jamming Detection, hierbei werden jeweilige Funkfrequenzen überwacht und abhängig von Auffälligkeiten bei den Funkfrequenzen ein Rückschluss auf eine Störung gezogen.

Der Genauigkeitswert GW_n kann beispielsweise abhängig von der Anzahl von verwendeten Systemen ermittelt werden, da gegebenenfalls die Genauigkeit des Messwerts bei Verwendung von mehr als einem System steigt.

Wird der Messwert MW_n abhängig von Mobilfunkinformationen ermittelt, beispielsweise unter Verwendung von Zelleninformationen des Mobilfunknetzes, so kann beispielsweise der Vertrauenswert VW_n ermittelt werden beispielsweise abhängig von einem Auswerten von mehreren Zelleninformationen zur gleichen Zeit gegebenenfalls unter Berücksichtigung der Signalstärke. Der Vertrauenswert VW_n kann alternativ oder zusätzlich abhängig von einer Verwendung von verschlüsselten beziehungsweise signierten Verbindungen ermittelt werden. Der Genauigkeitswert GW_n kann beispielsweise abhängig von Zelleninformationen, wie der Größe der Funkzelle, ermittelt werden. Der Genauigkeitswert GW_n kann alternativ oder zusätzlich abhängig von einer Verwendung zusätzlicher Positionsdienste des Mobilfunknetzes, wie beispielsweise A-GPS beziehungsweise und/oder anderen Geodiensten ermittelt werden.

Wird der Messwert MW_n abhängig von Dedicated Short Range Communication (DSRC) ermittelt, so kann der Vertrauenswert VW_n beispielsweise abhängig von einer Localisation Augmentation Communication (LAC) ermittelt werden. Alternativ oder zusätzlich kann er abhängig von einer Überprüfung von Baken-IDs ermittelt werden.

Wird der Messwert MW_n abhängig von einem Funknetz ermittelt, wie beispielsweise einem WLAN- oder Bluetooth-Netz, so kann beispielsweise der Vertrauenswert VW_n abhängig von einen Abgleich von Informationen der erreichbaren Zellen, beispielsweise der jeweiligen MAC-Adresse, mit Datenbanken ermittelt werden. Alternativ oder zusätzlich kann abhängig von einer Verwendung zusätzlicher positionsrelevanter Informationen der Funknetze der Vertrauenswert VW_n ermittelt werden.

Der Messwert MW_n kann alternativ oder zusätzlich abhängig von einer Kombination aus vergangenen Werten der bewegungsabhängigen Größe und/oder Fahrzeugsensoren und/oder Fahrzeugzustandsinformationen ermittelt werden. So kann beispielsweise der Vertrauenswert VW_n abhängig von Werten von Beschleunigungssensoren, Gyroskopen, Kompasssensoren oder anderen Sensoren ermittelt werden, da mittels dieser Sensoren eine Manipulationswahrscheinlichkeit überprüft werden kann. Auch der Genauigkeitswert GW_n kann abhängig von diesen Sensoren ermittelt werden, da gegebenenfalls mittels Verwendung mehrerer Sensoren die Genauigkeit steigt.

In einem Schritt S7 wird abhängig von den bereitgestellten Messwerten MW_1 - MW_n und ihrem jeweiligen Vertrauenswert VW_n und optional ihrem jeweiligen Genauigkeitswert GW_n der Wert der bewegungsabhängigen Größe WE ermittelt. So werden erfindungsgemäß die Messwerte MW_1 - MW_n mit dem jeweiligen Vertrauenswert VW_n und optional dem jeweiligen Genauigkeitswert GW_n gewichtet. Zusätzlich kann der Wert der bewegungsabhängigen Größe WE abhängig von Kalman-Filterung ermittelt werden. Er kann alternativ oder zusätzlich abhängig von Koppelnavigation oder Odometrie, also sogenanntem Dead Reckoning ermittelt werden. Alternativ oder zusätzlich kann er mittels neuronaler Netze ermittelt werden. Für die Ermittlung des Werts der bewegungsabhängigen Größe WE kann zusätzlich ein vorangegangener Wert der abhängigen Größe oder vorangegangene Werte der bewegungsabhängigen Größe mitgenutzt werden.

In einem Schritt S9 wird das Programm beendet und kann gegebenenfalls wieder in dem Schritt S1 gestartet werden.

Nach der Ermittlung des Werts der bewegungsabhängigen Größe WE kann außerdem ein Wert einer zweiten bewegungsabhängigen Größe abhängig von dem Wert der ersten bewegungsabhängigen Größe WE ermittelt werden. So kann beispielsweise abhängig von einem Positionswert ein Geschwindigkeitswert ermittelt werden. Dies kann beispielsweise durch Ableitung des Positionswerts geschehen. So lässt sich beispielsweise zusätzlich zu einer Mauteinheit ein Tachograph realisieren.

Außerdem können die Messwerte MW_1 - MW_n und/oder die Vertrauenswerte VW_1 - VW_n und/oder die Genauigkeitswerte GW_1 - GW_n und/oder der Wert der bewegungsabhängigen Größe WE und/oder der Wert der zweiten bewegungsabhängigen Größe dauerhaft gespeichert werden. Beispielsweise können diese Daten auf einer Festplatte gespeichert werden und später ausgelesen werden um Analysen zu erstellen. So kann beispielsweise eine Manipulationserkennung erfolgen. Außerdem ist es möglich, dass diese Daten an ein Hintergrundsystem übertragen werden. Dies kann beispielsweise immer erfolgen oder beispielsweise nur falls eine Manipulation wahrscheinlich ist, da einer der Vertrauenswerte VW_1 - VW_n einen vorgegebenen Schwellenwert überschreitet oder unterschreitet. Hierdurch kann beispielsweise in dem Hintergrundsystem die Manipulation erkannt werden.

## Patentansprüche

1. Verfahren zum Ermitteln eines Werts einer bewegungsabhängigen Größe (WE) mittels einer Vorrichtung (OBU), die eine Tachographeneinheit (TE) und eine Datenschnittstelle (DS) aufweist, welche Datenschnittstelle (DS) Messwerte (MW_n) empfängt, welche Messwerte (MW_n) von Sensoren (SENS_n) bereitgestellt werden, wobei die bewegungsabhängige Größe ein Positionswert oder ein Geschwindigkeitswert ist und bei welchem Verfahren
- von einem ersten Sensor (SENS_1) ein erster Messwert (MW_1) bereitgestellt wird, der die bewegungsabhängige Größe repräsentiert,
- von einem zweiten Sensor (SENS_2) ein zweiter unabhängiger Messwert (MW_2) bereitgestellt wird, der die bewegungsabhängige Größe repräsentiert,
- jedem Messwert (MW n) ein Vertrauenswert (VW n) zugeordnet wird, der repräsentativ ist für eine Manipulationswahrscheinlichkeit des jeweiligen Messwerts (MW_n),
- der jeweilige Sensor (SENS_n), der den zugeordneten Messwert (MW_n) bereitstellt, eine Selbstdiagnose durchführt,
- der jeweilige Vertrauenswert (VW_n) ermittelt wird abhängig von der Selbstdiagnose des jeweiligen Sensors, der den zugeordneten Messwert (MW_n) bereitstellt,
- abhängig von dem ersten (MW_1) und dem zweiten Messwert (MW_2) und ihrem jeweiligen Vertrauenswert (VW_n) der Wert der bewegungsabhängigen Größe (WE) ermittelt wird,
- wobei die Messwerte (MW_1 - MW_n) mit dem jeweiligen Vertrauenswert (VW_n) gewichtet werden.

2. Verfahren nach Anspruch 1, bei dem jedem Messwert (MW n) jeweils ein Genauigkeitswert (GW_n) zugeordnet wird, der charakteristisch ist für die Genauigkeit des jeweiligen Messwerts (MW_n) und bei dem abhängig von dem jeweiligen Genauigkeitswert (GW_n) der Wert der bewegungsabhängigen Größe (WE) ermittelt wird.

3. Verfahren nach Anspruch 2, wobei abhängig von einem Vergleich des jeweiligen Genauigkeitswerts (GW_n) mit einem Schwellenwert der jeweilige Messwert (MW_n) für das Ermitteln des Werts der bewegungsabhängigen Größe (WE) entweder berücksichtigt oder verworfen wird.

4. Verfahren nach einem der vorhergehenden Ansprüche, bei dem abhängig von dem Wert der bewegungsabhängigen Größe (WE) ein Wert einer zweiten bewegungsabhängigen Größe ermittelt wird.

5. Verfahren nach einem der vorhergehenden Ansprüche, bei dem mindestens einer der Messwerte (MW n) mittels eines satellitenbasierten Messprinzips ermittelt wird.

6. Verfahren nach einem der vorhergehenden Ansprüche, bei dem mindestens einer der Messwerte (MW_n) mittels Dedicated Short Range Communication ermittelt wird.

7. Verfahren nach einem der vorhergehenden Ansprüche, bei dem der Wert der bewegungsabhängigen Größe (WE) abhängig von Kalman-Filterung ermittelt wird.

8. Verfahren nach einem der vorhergehenden Ansprüche, bei dem die Messwerte (MW_1 - MW n) und/oder die Vertrauenswerte (VW_1 - VW_n) und/oder die Genauigkeitswerte (GW_1 - GW_n) und/oder der Wert der bewegungsabhängigen Größe (WE) und/oder der Wert der zweiten bewegungsabhängigen Größe dauerhaft gespeichert werden.

9. Verfahren nach einem der vorhergehenden Ansprüche, bei dem die Messwerte (MW_1 - MW_n) und/oder die Vertrauenswerte (VW_1 - VW_n) und/oder die Genauigkeitswerte (GW_1 - GW_n) und/oder der Wert der bewegungsabhängigen Größe (WE) und/oder der Wert der zweiten bewegungsabhängigen Größe an ein Hintergrundsystem übertragen werden.

10. Vorrichtung (OBU), die eine Tachographeneinheit (TE) und eine Datenschnittstelle (DS) aufweist, zum Ermitteln eines Werts einer bewegungsabhängigen Größe (WE), die dazu ausgebildet ist, ein Verfahren nach einem der Ansprüche 1 - 9 auszuführen.

## Claims

1. Method for determining a value of a movement-dependent variable (WE) by means of an apparatus (OBU) having a tachograph unit (TE) and a data interface (DS), which data interface (DS) receives measured values (MW_n), which measured values (MW_n) are provided by sensors (SENS_n), wherein the movement-dependent variable is a position value or a speed value, and in which method
- a first sensor (SENS_1) provides a first measured value (MW_1) representing the movement-dependent variable,
- a second sensor (SENS_2) provides a second, independent measured value (MW_2) representing the movement-dependent variable,
- each measured value (MW_n) is assigned a confidence value (VW_n) which is representative of a manipulation probability of the respective measured value (MW_n),
- the respective sensor (SENS_n) which provides the assigned measured value (MW_n) carries out a self-diagnosis,
- the respective confidence value (VW_n) is determined on the basis of the self-diagnosis of the respective sensor which provides the assigned measured value (MW_n),
- the value of the movement-dependent variable (WE) is determined on the basis of the first measured value (MW_1) and the second measured value (MW_2) and their respective confidence value (VW_n),
- wherein the measured values (MW 1 - MW_n) are weighted with the respective confidence value (VW_n).

2. Method according to Claim 1, in which each measured value (MW n) is respectively assigned an accuracy value (GW n) which is characteristic of the accuracy of the respective measured value (MW_n), and in which the value of the movement-dependent variable (WE) is determined on the basis of the respective accuracy value (GW_n).

3. Method according to Claim 2, wherein the respective measured value (MW_n) for determining the value of the movement-dependent variable (WE) is either considered or rejected on the basis of a comparison of the respective accuracy value (GW_n) with a threshold value.

4. Method according to one of the preceding claims, in which a value of a second movement-dependent variable is determined on the basis of the value of the movement-dependent variable (WE).

5. Method according to one of the preceding claims, in which at least one of the measured values (MW_n) is determined by means of a satellite-based measurement principle.

6. Method according to one of the preceding claims, in which at least one of the measured values (MW_n) is determined by means of dedicated short range communication.

7. Method according to one of the preceding claims, in which the value of the movement-dependent variable (WE) is determined on the basis of Kalman filtering.

8. Method according to one of the preceding claims, in which the measured values (MW 1 - MW n) and/or the confidence values (VW_1 - VW_n) and/or the accuracy values (GW_1 - GW_n) and/or the value of the movement-dependent variable (WE) and/or the value of the second movement-dependent variable are permanently stored.

9. Method according to one of the preceding claims, in which the measured values (MW_1 - MW_n) and/or the confidence values (VW 1 - VW n) and/or the accuracy values (GW_1 - GW_n) and/or the value of the movement-dependent variable (WE) and/or the value of the second movement-dependent variable are transmitted to a background system.

10. Apparatus (OBU), which has a tachograph unit (TE) and a data interface (DS), for determining a value of a movement-dependent variable (WE), which is designed to carry out a method according to one of Claims 1-9.

## Revendications

1. Procédé permettant de déterminer une valeur d'une grandeur dépendante d'un mouvement (WE) au moyen d'un dispositif (OBU) qui présente une unité de tachygraphe (TE) et une interface de données (DS), laquelle interface de données (DS) reçoit des valeurs de mesure (MW n) d'interface de données (DS), lesquelles valeurs de mesure (MW_n) sont fournies par des capteurs (SENS_n), la grandeur dépendante d'un mouvement étant une valeur de position ou une valeur de vitesse, et dans lequel procédé
- un premier capteur (SENS_1) fournit une première valeur de mesure (MW_1) qui représente la grandeur dépendante d'un mouvement,
- un deuxième capteur (SENS_2) fournit une deuxième valeur de mesure indépendante (MW_2) qui représente la grandeur dépendante d'un mouvement,
- à chaque valeur de mesure (MW_n) est associée une valeur de confiance (VW n) qui représente une probabilité de manipulation de la valeur de mesure (MW_n) respective,
- le capteur (SENS_n) respectif qui fournit la valeur de mesure (MW_n) associée effectue un autodiagnostic,
- la valeur de confiance respective (VW_n) est déterminée en fonction de l'autodiagnostic du capteur respectif qui fournit la valeur de mesure (MW n) associée,
- en fonction de la première (MW_1) et de la deuxième valeur de mesure (MW_2) et de leur valeur de confiance (VW_n) respective, la valeur de la grandeur dépendante d'un mouvement (WE) est déterminée,
- les valeurs de mesure (MW_1 à MW n) étant pondérées avec la valeur de confiance (VW_n) respective.

2. Procédé selon la revendication 1, dans lequel à chaque valeur de mesure (MW n) respectivement une valeur de précision (GW_n) est associée qui est caractéristique de la précision des valeurs de mesure (MW n) respectives, et dans lequel en fonction de la valeur de précision (GW_n) respective, la valeur de la grandeur dépendante d'un mouvement (WE) est déterminée.

3. Procédé selon la revendication 2, dans lequel la valeur de mesure (MW_n) respective est prise en compte ou rejetée pour déterminer la valeur de la grandeur dépendante d'un mouvement (WE) en fonction d'une comparaison de la valeur de précision (GW_n) respective à une valeur seuil.

4. Procédé selon l'une quelconque des revendications précédentes, dans lequel une valeur d'une deuxième grandeur dépendante d'un mouvement est déterminée en fonction de la valeur de la grandeur dépendante d'un mouvement (WE).

5. Procédé selon l'une quelconque des revendications précédentes, dans lequel au moins l'une des valeurs de mesure (MW_n) est déterminée au moyen d'un principe de mesure par satellite.

6. Procédé selon l'une quelconque des revendications précédentes, dans lequel au moins l'une des valeurs de mesure (MW_n) est déterminée au moyen d'une communication dédiée à courte portée, DSRC.

7. Procédé selon l'une quelconque des revendications précédentes, dans lequel la valeur de la grandeur dépendante d'un mouvement (WE) est déterminée en fonction d'un filtrage de Kalman.

8. Procédé selon l'une quelconque des revendications précédentes, dans lequel les valeurs de mesure (MW_1 à MW n) et/ou les valeurs de confiance (VW_1 à VW_n) et/ou les valeurs de précision (GW_1 à GW_n) et/ou la valeur de la grandeur dépendante d'un mouvement (WE) et/ou la valeur de la deuxième grandeur dépendante d'un mouvement sont enregistrées de manière permanente.

9. Procédé selon l'une quelconque des revendications précédentes, dans lequel les valeurs de mesure (MW_1 à MW n) et/ou les valeurs de confiance (VW_1 à VW_n) et/ou les valeurs de précision (GW_1 à GW_n) et/ou la valeur de la grandeur dépendante d'un mouvement (WE) et/ou la valeur de la deuxième grandeur dépendante d'un mouvement sont transmises à un système d'arrière-plan.

10. Dispositif (OBU) présentant une unité de tachygraphe (TE) et une interface de données (DS) pour déterminer une valeur d'une grandeur dépendante d'un mouvement (WE) qui est réalisée pour effectuer un procédé selon l'une quelconque des revendications 1 à 9.
